# EUROPÄISCHE PATENTSCHRIFT

(11) **EP 2 780 767 B1**
(45) Veröffentlichungstag und Bekanntmachung des Hinweises auf die Patenterteilung: **06.03.2019**
(21) Anmeldenummer: 12794673.9
(22) Anmeldetag: 15.11.2012
(51) Int. Cl.: A47C 20/04, A47C 31/00, G05B 15/02, G05B 19/042

(54) **ANORDNUNG MIT EINEM ELEKTROMOTORISCHEN MÖBELANTRIEB UND EINEM DATENGERÄT; VERFAHREN ZUM HERSTELLEN EINER KOMMUNIKATIONSVERBINDUNG ZWISCHEN DEM ELEKTROMOTORISCHEN MÖBELANTRIEB UND DEM DATENGERÄT; UND EIN ENTSPRECHENDER MÖBELANTRIEB**
ARRANGEMENT WITH AN ELECTROMOTIVE FURNITURE DRIVE AND A DATA DEVICE; METHOD FOR ESTABLISHING A COMMUNICATION CONNECTION BETWEEN THE ELECTROMOTIVE FURNITURE DRIVE AND THE DATA DEVICE; AND A CORRESPONDING FURNITURE DRIVE
SYSTÈME COMPORTANT UN DISPOSITIF D'ENTRAÎNEMENT À MOTEUR ÉLECTRIQUE POUR MEUBLES ET UN APPAREIL INFORMATIQUE ; PROCÉDÉ DESTINÉ À ÉTABLIR UNE CONNEXION DE COMMUNICATION ENTRE LE DISPOSITIF D'ENTRAÎNEMENT À MOTEUR ÉLECTRIQUE POUR MEUBLES ET L'APPAREIL INFORMATIQUE ; ET UN TEL DISPOSITIF D'ENTRAÎNEMENT POUR MEUBLES

(30) Priorität: 15.11.2011 DE 102011055362
(43) Veröffentlichungstag der Anmeldung: 24.09.2014
(73) Patentinhaber: Dewertokin GmbH, 32278 Kirchlengern (DE)
(72) Erfinder: Langejürgen, Stefan, 32602 Vlotho (DE)
(74) Vertreter: Kleine, Hubertus
(86) Internationale Anmeldenummer: PCT/EP2012/072773
(87) Internationale Veröffentlichungsnummer: WO 2013/072431

(56) Entgegenhaltungen:
- EP-A2- 0 434 986
- DE-A1-102006 051 014
- US-A1- 2003 044 068
- US-A1- 2005 256 939
- US-A1- 2008 092 292

## Beschreibung

Die Erfindung betrifft eine Anordnung mit einem elektromotorischen Möbelantrieb und einem Datengerät. Die Erfindung bezieht sich auch auf ein Verfahren zum Herstellen einer Kommunikationsverbindung des elektromotorischen Möbelantriebs mit dem Datengerät, und auf einen entsprechenden elektromotorischen Möbelantrieb.

Eine solche Anordnung dient z.B. zur Datenübertragung zwischen einem Datengerät, das beispielsweise ein Programmiergerät ist, und einem elektromotorischen Möbelantrieb eines Möbels. Auf diese Weise können Vorgänge wie z.B. Neuprogrammierung, Programmänderungen, Zusatzprogrammierungen, Parametereinstellungen, Parameteränderungen usw. eines Steuerprogramms des elektromotorischen Möbelantriebs vorgenommen werden. Das Programmiergerät kann dabei auch ein Computer sein.

Das Datengerät wird üblicherweise anstelle einer Handbedienung, die auch als Bedienungseinrichtung bezeichnet wird, mit dem elektromotorischen Möbelantrieb, d.h. mit dessen Steuerung, über eine Steckverbindung gekoppelt. Dazu wird eine Kabelauszugsicherung der Steckverbindung der Handbedienung gelöst, der Stecker der Handbedienung aus der Steckverbindung an der Steuerung entfernt und ein Stecker des Datengerätes in die Steckverbindung an der Steuerung eingeführt. Andere Steuerungen weisen eine separate Steckverbindung nur für Datengeräte auf. Diese Steckverbindungen sind aber im normalen Betrieb unbenutzt, so dass sie gegen Eindringen von Feuchtigkeit und Staub entsprechend geschützt werden müssen. Einschlägige Vorschriften bestimmen dazu entsprechende Abdeckungen und Abdichtungen, welche ggf. in bestimmter Weise auch befestigt sein müssen. Zur Verwendung des Datengerätes sind diese Abdeckungen und Abdichtungen zu entfernen und nach Benutzung wieder vorschriftsgemäß zu verschließen.

Ein Beispiel dazu illustriert DE 196 03 318 A1 mit Beschreibung eines Steuerungssystems für elektromotorisch betätigbare Verstelleinrichtungen für Krankenhausbetten. Hierbei kann ein Programmiergerät, z.B. ein Laptop, zeitweise mit einem Kabel an die Bettensteuerung angeschlossen und zu Wartungszwecken verwendet werden.

Bei derartigen Anordnungen, bei welchen mehrere Möbel in unmittelbarer Nähe zueinander aufgestellt sind, wie beispielsweise in Krankenhäusern, Pflegeheimen, Ausstellungsräumen, kann es möglich sein, dass als Datengeräte so genannte Multimediageräte zum Einsatz kommen. Diese können Bedienungselemente als Berührungsschalter (Touchscreen) aufweisen, die mit dem jeweiligen elektromotorischen Möbelantrieb anstelle einer vorhandenen Handbedienung mittels passender Kabel anschließbar sind.

Elektromotorische Möbelantriebe sind in vielen unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise in Form eines Gewindespindelgetriebes nachgeschaltet ist, welches aus der Drehbewegung des Motors eine Linearbewegung des Abtriebsgliedes erzeugt. Die Rotationsantriebe weisen wenigstens ein dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelantriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patientenlifter ausgebildet sein.

Es ist üblich, derartige elektromotorische Möbelantriebe mit einer so genannten Netzfreischaltung zu versehen, welche diese bei Nichtgebrauch mehr oder weniger vom elektrischen Versorgungsnetz trennt. Zum Betrieb einer solchen Netzfreischaltung ist eine so genannte Hilfsspannungsquelle erforderlich, welche zum Umschalten oder wenigstens Einleiten einer Umschaltung aus einem ausgeschalteten Ruhezustand in einen eingeschalteten Betriebszustand zum Auslösen der Schaltsignale eine elektrische Energie bereitstellt.

Weitere Verbraucher, die an eine Steuerungsvorrichtung des elektromotorischen Möbelantriebs anschließbar sind, sind u.a. Massageantriebe, Heizungen, Leuchten uva. Die Bedienungseinrichtung kann über eine drahtgebundene oder drahtlose (Funk/Infrarot) bidirektionale Übertragungsstrecke ausgebildet sein. Dabei bedeutet bidirektional, dass die Bedienungseinrichtung nicht nur Steuersignale an die Steuerungsvorrichtung leiten kann, sondern auch seitens der Steuervorrichtung z.B. Signale empfangen kann.

Es sind Bedienungseinrichtungen mit einem vollgrafischen Display (Anzeigeeinrichtung) und mit eingebrannten (hardwaretechnischen) Bildern bekannt. Das vollgrafische Display zeigt verschiedene Bilder und Funktionen der Verbraucher an.

Das Dokument US 2008/092292 A1 beschreibt Verfahren und Systeme eines einstellbaren Betts. Das Bett kann ein oder mehrere bewegbare Abschnitte und eine oder mehrere Komponenten aufweisen, welche aufblasbare Matratzen im Zusammenhang mit dem verstellbaren Bettrahmen, eine programmierbare Logiksteuereinrichtung. eine nicht lokal angeordnete Speichereinrichtung, einen nicht lokal angeordneten Speicherort für Benutzereinstellungen, eine Mobiltelefon-Fernsteuerung, eine modulare Steuereinrichtung, eine Luftreinigungseinheit, eine Ausgangsleistungssteuerung, eine Bluetooth-Fernsteuerung, eine Ultrabreitbandsignal-Fernsteuerung, eine drahtlose USB-Fernsteuerung und dergleichen umfassen.

US 2005/256939 A1 beschreibt ein System. Verfahren und eine Vorrichtung einer Fertigungsautomatisierungseinrichtung. Die automatische Konfigurierung beinhaltet die Identifizierung der Gerätenetzwerkadresse und dann die Suche nach einem Konfigurationsserver. Der Konfigurationsserver beinhaltet die Konfigurierungseinträge zum Herunterladen in die Automatisierungseinrichtung und kann Konfigurierungseinträge für eine Anzahl von Geräten enthalten. Demzufolge muss eine Suche nach dem Konfigurierungseintrag für das spezielle Gerät in dem Konfigurationsserver erfolgen. Sobald dieser gefunden ist, wird die Konfiguration aus dem Konfigurationsserver in das Automatisierungsgerät heruntergeladen.

Die Aufgabe der Erfindung besteht darin, eine verbesserte Anordnung mit einem elektromotorischen Möbelantrieb und einem Datengerät bereitzustellen, wobei der elektromotorische Möbelantrieb eines jeden Möbels identifiziert und mit diesem individuell kommuniziert werden kann.

Die Aufgabe wird durch die Gegenstände der unabhängigen Ansprüche gelöst.

Demgemäß umfasst eine Anordnung einen elektromotorischen Möbelantrieb mit einer Steuervorrichtung, einer Energieversorgungseinrichtung, und mindestens einer Bedienungseinrichtung; ein Möbel, in welches der elektromotorische Möbelantrieb eingebaut ist; und ein Datengerät, wobei der elektromotorische Möbelantrieb und das Datengerät in einer Kommunikationsverbindung stehen. Hierbei weist die Kommunikationsverbindung zwischen dem elektromotorischen Möbelantrieb und dem Datengerät eine erste Übertragungsstrecke, welche zur Übertragung eines Identifizierungscodes des elektromotorischen Möbelantriebs vorgesehen ist, und eine zweite Übertragungsstrecke, welche zur Übertragung von Steuerdaten und/oder Betriebsdaten des elektromotorischen Möbelantriebs vorgesehen ist, auf.

Unter dem Begriff "Kommunikationsverbindung" ist ein Datenaustausch zu verstehen, wobei Daten von dem Datengerät an den elektromotorischen Möbelantrieb und umgekehrt übertragen werden. Diese Daten können beispielsweise Parameterdaten, Betriebsdaten, Grenzwertdaten, Programmdaten (Software) usw. sowie Steuerdaten zur Steuerung des elektromotorischen Möbelantriebs sein. Andere Daten oder die Betriebsdaten können sich auf den Verschleiß des elektromotorischen Möbelantriebs beziehen. Die einem Verschleiß entsprechenden Daten können sich aber auch aus den Betriebsdaten und / oder aus den eingangs genannten Daten berechnen oder bestimmen lassen.

Ein erfindungsgemäßes Verfahren zum Herstellen einer Kommunikationsverbindung zwischen einem elektromotorischen Möbelantrieb eines Möbels und einem Datengerät einer Anordnung ist gekennzeichnet durch die Verfahrensschritte (S1) Bereitstellen eines Identifizierungscodes des elektromotorischen Möbelantriebs des Möbels mittels einer Identifizierungseinrichtung des elektromotorischen Möbelantriebs; (S2) Übertragen des von der Identifizierungseinrichtung bereitgestellten Identifizierungscodes über eine erste Übertragungsstrecke zwischen der Identifizierungseinrichtung und einer Kommunikationseinrichtung des Datengerätes; (S3) Identifizieren des elektromotorischen Möbelantriebs durch Prüfen des empfangenen Identifizierungscodes; und (S4) Herstellen der Kommunikationsverbindung zwischen dem elektromotorischen Möbelantrieb des Möbels und der Kommunikationseinrichtung des Datengerätes und Verwenden einer zweiten Übertragungsstrecke zwischen dem elektromotorischen Möbelantrieb (2) und der Kommunikationseinrichtung des Datengerätes.

Die Kommunikationsverbindung mit zwei Übertragungsstrecken ermöglicht dabei in vorteilhafter Weise, dass nicht nur ein Datengerät zur Wartung, Service und Diagnose mit dem elektromotorischen Möbelantrieb verwendbar ist, sondern auch ein Datengerät zu Bedienungszwecken, z.B. ein Multimediagerät verwendbar ist.

Als Multimediagerät sind außerdem Geräte definiert, welche über eine Eingabeeinheit beispielsweise in Form eines Touchscreen oder einer Tastatur verfügen, welche ebenso über eine Ausgabeeinheit beispielsweise in Form eines Bildschirms oder eines Displays verfügen und welche zumindest über eine Möglichkeit zur optischen, elektromagnetischen oder elektrischen Übertragung von Datensätzen verfügen. Multimediageräte können tragbar und elektrisch unabhängig vom Energieversorgungsnetz ausgebildet sein und sind beispielsweise als Smartphone oder als Handy bzw. als Mobilfunktelefon ausgebildet.

Ein Datengerät zu Bedienungszwecken ist somit gegeben, wenn damit die Motore oder andere Komponenten des elektromotorischen Möbelantriebs bedient werden können, so dass beispielsweise der das Möbel verstellende Verstellantrieb ein- oder ausgeschaltet werden kann. Die Definition läßt sich auch im Umkehrschluß erläutern, wenn ein Bedienungsgerät zu Datenzwecken das jeweilige Möbel steuern kann, somit also den jeweiligen Verstellantrieb des Möbels oder andere elektrische Komponenten des Möbel ein- oder ausschalten kann oder zumindest dessen Status abrufen kann.

Mittels der ersten Übertragungsstrecke ist es möglich, eine Identifizierung des elektromotorischen Möbelantriebs für eine eindeutige Zuordnung vorzunehmen. Nach der Erkennung des Identifizierungscodes synchronisiert sich das Datengerät automatisch mit nur diesem dem Identifizierungscode entsprechenden elektromotorischen Möbelantrieb. Erst wenn diese Identifizierung erfolgt und der elektromotorische Möbelantrieb eindeutig auf diese Weise erkannt ist, wird die Kommunikationsverbindung für einen Datenaustausch hergestellt und freigegeben.

In einer Ausführung ist vorgesehen, dass die erste Übertragungsstrecke drahtlos ausgebildet ist, und dass die zweite Übertragungsstrecke mindestens teilweise drahtlos ausgebildet ist. Dadurch wird es möglich, dass keine Kabelverbindungen neu zu installieren sind. Bestehende Anschlüsse von Handbedienungen sind nicht zu verändern. Durch die drahtlose Ausführung der Übertragungsstrecken kann eine bequeme Einrichtung der Anordnung erfolgen, denn die bisher übliche umständliche Ankopplung kann entfallen. Es wird also weder eine bestehende Kabelverbindung getrennt noch eine separate Leitung wieder entfernt.

In dem Fall, dass, z.B. in einem Krankenhaus, mehrere Möbel in unmittelbarer Nähe zueinander stehen, sind alle Datengeräte und alle Möbel beziehungsweise alle elektromotorischen Möbelantriebe zum Empfang von Signale auf drahtlosem Wege bereit. Da die Kommunikationsverbindung aber zwei Übertragungsstrecken verwendet, nämlich eine zur Identifikation und eine zur Datenübertragung, erfolgt eine eindeutige Zuordnung zwischen Datengerät und zuzuordnendem elektromotorischen Antrieb.

Weiterhin ist vorgesehen, dass mindestens eine der beiden Übertragungsstrecken bidirektional ausgebildet ist, wodurch ein Datenaustausch in beiden Richtungen erfolgen kann. In einer vereinfachten und bevorzugten Form ist jedoch mindestens eine der Übertragungsstrecken als unidirektionale Übertragungsstrecke ausgebildet.

In einer weiteren Ausführung sind die erste Übertragungsstrecke und die zweite Übertragungsstrecke zwischen dem elektromotorischen Möbelantrieb und einer mit dem Datengerät verbundenen Kommunikationseinrichtung angeordnet. Beide Übertragungsstrecken können so mit ihren zugehörigen Komponenten in einer Einrichtung zusammengefasst werden.

Dabei ist vorgesehen, dass der elektromotorische Möbelantrieb mit einer Identifizierungseinrichtung für die erste Übertragungsstrecke und mit einer Übertragungseinrichtung für die zweite Übertragungsstrecke ausgerüstet ist, wobei die Kommunikationseinrichtung eine Identifiziereinheit für die erste Übertragungsstrecke und eine Übertragungseinheit für die zweite Übertragungsstrecke aufweist. Dadurch können die Übertragungsstrecken eindeutig zugeordnet werden.

In einer noch weiteren Ausführung ist vorgesehen, dass die Identifizierungseinrichtung an oder/und in der Bedienungseinrichtung oder an oder/und in einem Teil des elektromotorischen Möbelantriebs angeordnet ist. So kann eine vielseitige Anbringung erfolgen.

In einer anderen Ausführung ist die Identifizierungseinrichtung einem Möbel zugeordnet. Dies erfolgt in einfachster Weise wie zuvor genannt, da die Bedienungseinrichtung oder der elektromotorische Möbelantrieb dem Möbel zugeordnet ist. Andere Ausführungen, wobei die Identifizierungseinrichtung dem Möbel zugeordnet ist, sind mit dem Möbel verbindbar ausgebildet. Diese können mit einer Information über den Patienten, beispielsweise mit dessen Namen, in Verbindung gebracht werden. Typischerweise ist der elektromotorische Möbelantrieb ein fester Bestandteil des Möbels. Andere Identifizierungseinrichtungen sind indirekt dem Möbel zugeordnet, indem sie einem Patienten, beispielsweise in Form des Patientenhandbandes, eines Patientendatenträgers oder der Patientenakte zugeordnet sind.

In einer Ausführung ist die Identifizierungseinrichtung als ein Identifizierungscode durch Einlasern, Aufdrucken, einen bedruckten oder geprägten Aufkleber, ein spanendes Einformen, Umformen (Einprägen), Urformen (Einspritzen bei einem Spritzgussgehäuse), Farbfolge, oder/und Farbspektrum auf- oder/und angebracht. In dieser Ausführung ist der Identifizierungscode als optisch lesbarer oder als optisch erkennbarer Identifizierungscode ausgebildet. Der Identifizierungscode kann z.B. von einer integrierten Kamera (Webcam des Datengerätes) aufgenommen und abgebildet werden. Wenn die Identifizierungseinrichtung auf der Handbedienung des elektromotorischen Möbelantriebs angeordnet ist, kann die Handbedienung z.B. vor die Kamera gehalten werden Der Identifizierungscode beinhaltet z.B. die fortlaufende Seriennummer der Steuerung des elektromotorischen Antriebs (oder mindestens die Seriennummer einer Komponente des Antriebssets, oder eine einzigartige Kennung der Steuerung). Andere Identifizierungscodes können als Strichcode, als Matrixcode oder als Rastercode wie z.B. als Barcode, Zielcode oder als zweidimensionaler Code / Datamatrix bzw. Datenmatrix ausgebildet sein.

Prinzipiell kommen Identifizierungscodes zum Einsatz, welche von außen sichtbar sind. Das umfasst Identifizierungscodes, welche mit der Bedienungseinrichtung, mit dem elektromotorischen Möbelantrieb, mit einer elektrischen Verbindungsleitung, mit dem Möbel, mit einem Patienten in Verbindung stehen bzw. damit eine Verbindung eingehen. Derartige Verbindungen können mechanische Verbindungen sein oder sind, mit Ausnahme des Patienten, stoffschlüssige Verbindungen. Sichtbar bedeutet dabei, dass der Identifizierungscode mit dem menschlichen Auge wahrgenommen werden kann. Andere Ausführungen eines sichtbaren Identifizierungscodes sind für das menschliche Auge unsichtbar und können nur von einem künstlichen Auge, beispielsweise von einer Kamera oder von einem Scanner, wahrgenommen werden.

Andere Identifizierungscodes sind in elektronischer Form abgebildet und mit elektrischen Identifizierungseinrichtungen ausgeführt, welche elektromagnetische, elektromechanische, magnetische, kapazitive Identifizierungseinrichtungen umfassen. Diese sind im Folgenden als elektrische Identifizierungseinrichtungen beschrieben. Elektrische Identifizierungseinrichtungen sind beispielsweise als RFID-Einrichtungen oder als Magnetstreifen ausgeführt. In einer Ausführung sind diese innerhalb eines Gehäuses angeordnet, welches beispielsweise das Gehäuse der Bedienungseinrichtung oder des elektromotorischen Möbelantriebs bildet. Andere elektrische Identifizierungseinrichtungen stehen wie zuvor beschrieben mit dem Patienten oder mit dem Möbel in Verbindung. Derartige Verbindungen können wie eingangs beschrieben mechanische Verbindungen sein.

Als praktische Ausführungen von Identifizierungseinrichtungen kommen somit beispielsweise Barcodeaufkleber, Ziffernaufkleber, RFID-Aufkleber, RFID-Schaltungen, Bettclips, Patientenkarte, Patientenband in Betracht. Ein RFID-Aufkleber ist ein mehrschichtiges Objekt, welches eine elektrische RFID-Schaltung aufweist und mittels eines Klebefilms montiert werden kann. Eine RFID-Schaltung kann Bestandteil einer Leiterplatte eines elektromotorischen Möbelantriebs oder eines Bedienelements bzw. einer Bedieneinrichtung sein.

Es ist auch möglich, dass die Kamera in einem separaten Teil der Kommunikationseinrichtung angeordnet ist und von einem Bediener an die Identifizierungseinrichtung zum Lesen des Identifizierungscodes herangeführt wird.

In einer alternativen Ausführung weist die Identifizierungseinrichtung einen gespeicherten Datenwert eines Identifizierungscodes auf und ist für eine Ausgabe des Identifizierungscodes als ein optisches Signal mittels eines Übertragungselementes ausgebildet. Dadurch kann z.B. auch eine Anzeigeleuchte der Handbedienung verwendet werden. In dieser Ausführung wird die Anzeigeleuchte oder wird eine vorbestimmte Anzeigeleuchte von einem vorgeschalteten Mikrocontroller als eine Art Blinklicht betrieben, was von dem menschlichen Auge jedoch als kontinuierlich leuchtende Anzeigeleuchte wahrgenommen wird. Dabei trägt das Ein- und Ausschalten der Anzeigeleuchte die auswertbare Information zur Identifizierung. Als Anzeigeleuchte kommt eine LED in Betracht, welche beispielsweise den Status eines Akkumulators oder den Betrieb eines Verstellantriebs dem Benutzer optisch anzeigt.

In einer Ausführung ist die erste Übertragungsstrecke zwischen der Identifizierungseinrichtung und der Identifiziereinheit angeordnet, wobei die zweite Übertragungsstrecke zwischen der Übertragungseinrichtung und der Übertragungseinheit angeordnet ist. Die Übertragungsstrecken verlaufen somit an verschiedenen Orten praktisch parallel zueinander. Sie werden aber nacheinander betrieben, da zunächst die erste Übertragungsstrecke zur Identifikation betrieben wird und danach die zweite Übertragungsstrecke zum Datenaustausch.

Es ist vorgesehen, dass die erste Übertragungsstrecke eine optische Übertragungsstrecke ist, und dass die zweite Übertragungsstrecke eine Funkstrecke ist. Unter "optischer" Übertragungsstrecke ist auch zu verstehen, dass der Identifizierungscode sowohl von einem optischen Gerät, also maschinell, als auch vom menschlichen Auge lesbar ist.

In einer alternativen Ausführung sind die erste Übertragungsstrecke und die zweite Übertragungsstrecke zwischen der Identifizierungseinrichtung und der Identifiziereinheit angeordnet. Dabei wird die Identifiziereinheit von der Übertragungseinheit verwendet.

Hierbei bilden die erste Übertragungsstrecke und die zweite Übertragungsstrecke eine gemeinsame optische Übertragungsstrecke. Die Übertragungsstrecken werden jedoch nacheinander betrieben. Dadurch lassen sich Bauteile einsparen.

In einer noch weiteren Ausführung ist die Kommunikationseinrichtung als ein separates Zusatzteil ausgebildet. Dies kann z.B. ein USB-Stick sein, wodurch ein einfaches Verbinden mit dem Datengerät möglich ist. Das Zusatzteil kann unabhängig vom Datengerät erstellt werden.

In einer alternativen Ausführung ist die Kommunikationseinrichtung mindestens teilweise in dem Datengerät integriert. So können vorhandene Funktionen des Datengerätes mitbenutzt werden.

In einer noch weiteren Ausführung weist der elektromotorische Antrieb eine Erfassungseinrichtung zur Erfassung von Betriebsdaten des elektromotorischen Antriebs auf.

In einer weiteren Ausführung ist das Datengerät ein Multimediagerät mit einem Touchscreen. So kann das Datengerät auch als Bedienungsgerät verwendet werden.

In einer anderen Ausführung erfolgt das Bereitstellen des Identifizierungscodes automatisch oder menügesteuert durch das Datengerät. Der Bediener kann ein entsprechendes Programm auf dem Datengerät starten.

Wenn das Übertragen im Verfahrensschritt (S2) optisch erfolgt, sind mehrere Möglichkeiten zur Übertragung gegeben, wobei in einer Ausführung ein Abbilden des Identifizierungscodes mittels eines optischen Gerätes erfolgt. Es ist auch möglich, dass ein Lesen des Identifizierungscodes durch einen Benutzer und Eingeben mittels einer Tastatur erfolgt, wenn z.B. kein Lesegerät vorhanden ist oder ein vorhandenes nicht funktioniert (z.B. Batterie schwach).

In einer alternativen Ausführung erfolgt ein Senden des Identifizierungscodes mittels Lichtsignalen. Dies kann besonders schnell erfolgen, wobei eine Fehlübertragung des Identifizierungscodes höchst unwahrscheinlich sein kann.

Die Lichtsignale können im sichtbaren oder im infraroten Bereich liegen. Idealerweise sind die Lichtsignale für das menschliche Auge sichtbar und werden von einer elektrischen Lichtquelle erzeugt, welche in einer Ausführung als LED ausgebildet ist. Die elektrische Lichtquelle wird von einer Steuereinrichtung des elektromotorischen Möbelantriebs oder der Bedienungseinrichtung geschaltet/gesteuert. Idealerweise umfasst der elektromotorische Möbelantrieb, das Möbel oder die Bedienungseinrichtung die elektrische Lichtquelle. Das Ein- und Ausschalten des Lichts erfolgt in einer verschlüsselten Art einer seriellen Datenübertragung, was den Identifizierungscode bildet. Hierzu kann in einer Ausführung die Bedienungseinrichtung oder der elektromotorische Möbelantrieb eine separate Lichtquelle aufweisen. In einer bevorzugten Ausführungsform der Lichtquelle ist diese durch eine vorhandene Kontrollleuchte der Bedienungseinrichtung oder des elektromotorischen Möbelantriebs gebildet. Dabei kann das Ein- und Ausschalten der Lichtquelle derart rasch erfolgen, dass dies vom menschlichen Auge nicht wahrnehmbar ist. Typische Ausschaltzeiten des Lichts liegen im Bereich 5 bis 50 Millisekunden.

Ein elektromotorischer Möbelantrieb der oben beschriebenen Anordnung ist mit einer Identifizierungseinrichtung für eine erste Übertragungsstrecke der Kommunikationsverbindung und mit einer Übertragungseinrichtung für eine zweite Übertragungsstrecke der Kommunikationsverbindung ausgerüstet.

Der Datenaustausch bei der Kommunikationsverbindung kann äußerst einfach erfolgen, da die Übertragung über die zweite Übertragungsstrecke in einer Ausführung per Funk erfolgt. Als Funkübertragung können entsprechende Module, die in hoher Qualität kostengünstig am Markt verfügbar sind, verwendet werden. Es ist aber auch denkbar, dass Funkstandards wie Bluetooth oder WLAN zur Anwendung kommen können. Dadurch kann eine Kommunikationsverbindung zu einem mobilen Datengerät, beispielsweise Mobiltelefon, Smartphone, Laptop, Palm-Top oder I-Pad erfolgen.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine schematische Blockdarstellung eines Ausführungsbeispiels einer erfindungsgemäßen Anordnung mit einem ersten Ausführungsbeispiel eines erfindungsgemäßen elektromotorischen Möbelantriebs;
- Figur 2: die schematische Blockdarstellung nach Figur 1 mit einem zweiten Ausführungsbeispiel des erfindungsgemäßen elektromotorischen Möbelantriebs; und
- Figur 3: ein schematisches Flussdiagramm eines Ausführungsbeispiels eines erfindungsgemäßen Verfahrens.

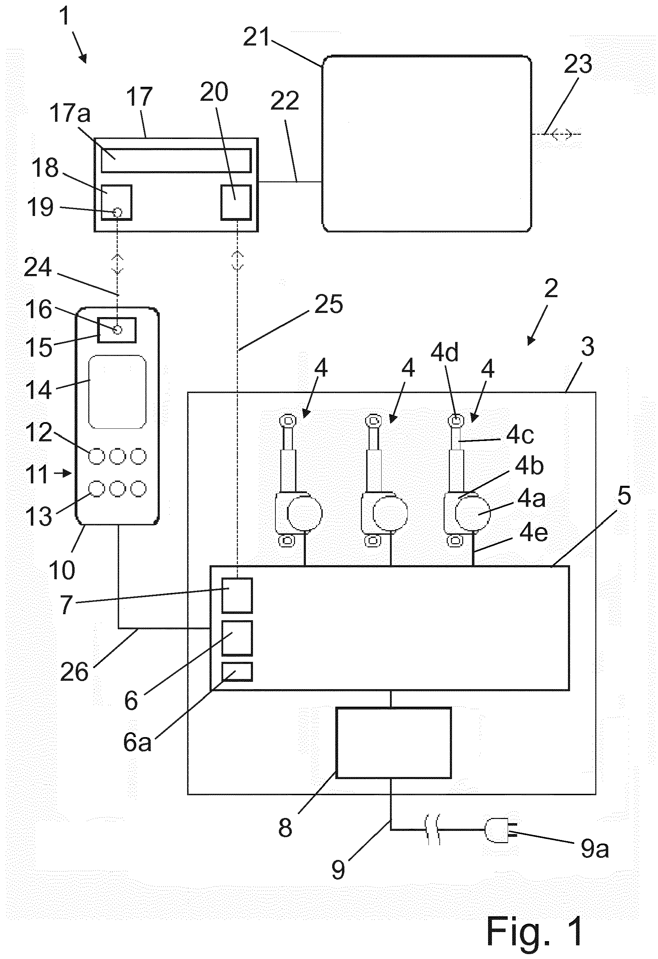

In Figur 1 ist eine schematische Blockdarstellung eines Ausführungsbeispiels einer erfindungsgemäßen Anordnung 1 mit einem Ausführungsbeispiel eines erfindungsgemäßen elektromotorischen Möbelantriebs 2 dargestellt.

Die Anordnung weist hier den elektromotorischen Möbelantrieb 2, ein nur schematisch durch einen rechteckigen Kasten angedeutetes Möbel 3 und ein Datengerät 21 auf.

Der elektromotorische Möbelantrieb 2 ist dem Möbel 3 zugeordnet, welches in der Anordnung 1 dieses Ausführungsbeispiels ein Hospital- oder Pflegebett ist. Hierzu ist der elektromotorische Möbelantrieb 2 in einer gemäß dem Einsatz entsprechenden IP-Schutzart ausgeführt, auf die hier aber nicht näher eingegangen werden soll.

Andere Arten von Möbeln sind eingangs bereits erwähnt, sind in den Figuren nicht näher dargestellt und können somit als Sessel, Liege, haushaltsübliches Bett oder als Lattenrost ausgebildet sein. Möbelähnliche Arten, wobei jedoch die Anordnung 1 durchaus Verwendung finden kann, sind durch Rehabilitationsgeräte wie Patientenlifter oder Wannenlifter oder dergleichen gebildet, fallen jedoch ebenfalls in die Definition Möbel, da sie als Mobiliar, also als Einrichtungsgegenstände vorwiegend in Innenräumen ausgebildet sind.

Das Datengerät 21 kann z.B. ein Lesegerät, ein Schreibgerät (Programmiergerät), Mobiltelefon, Laptop, etc., oder im Allgemeinen ein mobiles Gerät sein. In diesem Ausführungsbeispiel ist das Datengerät 21 ein Multimediagerät in einem Patientenzimmer eines Krankenhauses oder/und Pflegeheims, wobei dies Multimediagerät über dem als Hospital- oder/und Pflegebett ausgebildeten Möbels 3, z.B. über dessen Fußteil an einer Wand oder von einer Decke herabhängend, angebracht ist. Dieses Multimediagerät ist als Datengerät 21 in diesem Beispiel auch mit einem Bildschirm und einem Touchscreen ausgerüstet. D.h., die Bedienung des elektromotorischen Möbelantriebs 2 des Möbels 3 kann durch das Datengerät 21 erfolgen, wenn eine Kommunikationsverbindung zwischen dem Datengerät 21 und dem elektromotorischen Möbelantrieb 2 hergestellt ist.

Diese Kommunikationsverbindung weist eine erste Übertragungsstrecke 24 und eine zweite Übertragungsstrecke 25 auf. Dabei erfolgt zuerst eine Identifikation des elektromotorischen Möbelantriebs 2 über die erste Übertragungsstrecke 24. Nach erfolgter Identifikation wird ein Datenaustausch mit dem elektromotorischen Möbelantrieb 2 über die zweite Übertragungsstrecke 25 durchgeführt. Dies wird unten noch im Detail beschrieben.

Das Datengerät 21 ist über eine Verbindung 22 mit einer Kommunikationseinrichtung 17 verbunden. Die Kommunikationseinrichtung 17 dient zur Herstellung und zum Betrieb der Kommunikationsverbindung zwischen dem Datengerät 21 und dem elektromotorischen Möbelantrieb 2. Die erste Übertragungsstrecke 24 und die zweite Übertragungsstrecke 25 sind zwischen der Kommunikationseinrichtung 17 und dem elektromotorischen Möbelantrieb 2 angeordnet, und werden weiter unten zusammen mit der Kommunikationseinrichtung 17 noch ausführlich beschrieben.

Das Datengerät 21 ist hier außerdem über einen bidirektionalen Anschluss 23 mit einem Intranet und/oder dem Internet oder einem anderen Datennetz verbunden. So kann z.B. über das Internet eine Fernwartung des elektromotorischen Möbelantriebs 2 bei hergestellter Kommunikationsverbindung erfolgen.

Unter dem Begriff "Datenaustausch" ist nicht nur ein Auslesen, Übertragen und Einschreiben von Datenwerten, z.B. Betriebsdaten des elektromotorischen Möbelantriebs 2, sondern auch ein Übertragen von Datenwerten von Steuerdaten, die Steuerbefehle für den elektromotorischen Möbelantrieb 2 beinhalten. Auf diese Weise kann dann das Datengerät 21 in der Ausführung als Multimediagerät mit Touchscreen zur Bedienung des elektromotorischen Möbelantriebs 2 des Möbels 3 verwendet werden. Eventuelle Bedienungseinschränkungen für einen Patienten, der sich in dem Beispiel als Hospital-/Pflegebett ausgebildeten Möbel 3 befindet können durch entsprechende Einrichtungen, auf die hier nicht eingegangen wird, natürlich möglich sein.

In diesem Ausführungsbeispiel umfasst der elektromotorische Möbelantrieb 2 drei Verstellantriebe 4 ausgebildet als Linearantriebe, eine Steuervorrichtung 5, eine Energieversorgungseinrichtung 8 und eine Bedienungseinrichtung 10.

Ein Aufbau der Verstellantriebe 4 ist an dem rechten Verstellantrieb 4 mit Bezugszeichen stellvertretend für die anderen dargestellt. Die Verstellantriebe 4 weisen je nach Drehrichtung eines nicht näher dargestellten Elektromotors 4a ein Gehäuse 4b und ein- und ausfahrbares Hubrohr 4c auf, an dessen freies Ende ein Anschlussteil in Form eines Gabelkopfes 4d angebracht ist. Ein weiteres Anschlussteil, z.B. auch in Form eines weiteren Gabelkopfes (nicht gezeigt) ist an dem Gehäuse 4b des Verstellantriebs 4 befestigt. Das jeweilige Anschlussteil steht in nicht näher dargestellter Weise mit jeweils einem Möbelbauteil des Möbels 3 in Verbindung, so dass sich bei Betrieb des Elektromotors 4a die an dem Verstellantrieb 4 jeweils angeschlossenen Möbelbauteile relativ zueinander bewegen. Die drei Verstellantriebe 4 sind an der Steuervorrichtung 5 mittels Motoranschlussleitungen 4e angeschlossen. Der jeweilige Anschluss kann z.B. mittels Steckverbinder in unterschiedlichen IP-Schutzarten, beispielsweise Spritzwasserschutz, ausgeführt sein.

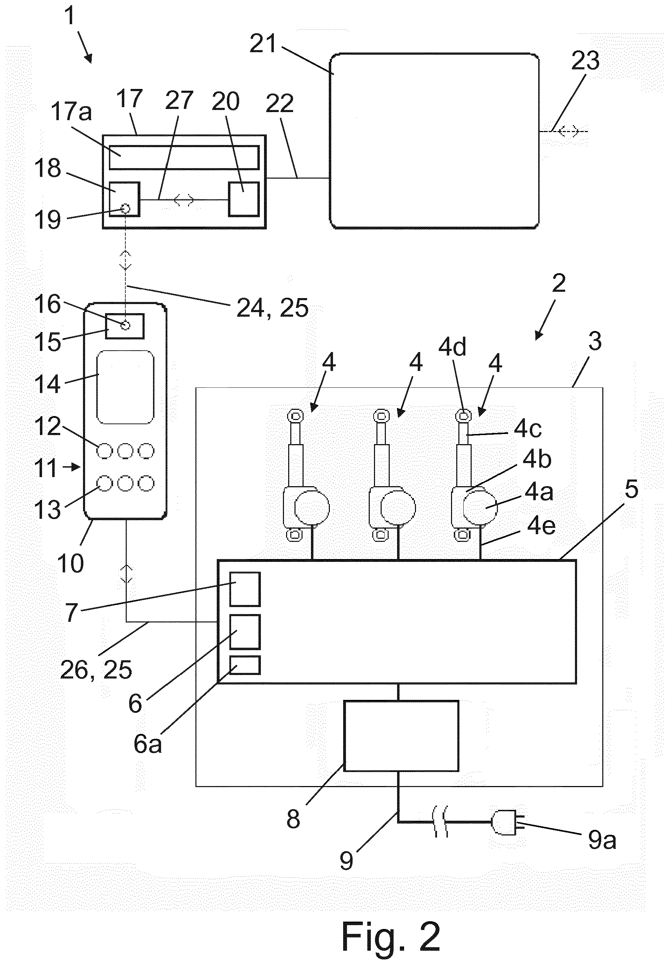

Die Steuervorrichtung 5 ist in Figur 1 und 2 als ein rechteckiger Block dargestellt und weist mehrere Einrichtungen auf, von denen hier nicht alle näher gezeigt sind. So ist z.B. eine Einrichtung davon als Motorsteuerung bezeichnet, die als Relaissteuerung mit Relaisschaltern oder/und als Halbleiterschaltung mit Halbleiterschaltern ausgebildet sein kann. Weiterhin kann ein so genannter Kontroller, z.B. ein Mikrocomputer, vorgesehen sein, welcher eine zugehörige Steuersoftware und eine oder mehrere Speicher aufweist.

Die Steuervorrichtung 5 umfasst außerdem eine Erfassungseinrichtung 6 mit einer Speichereinrichtung 6a, und eine Übertragungseinrichtung 7.

Die Erfassungseinrichtung 6 erfasst Betriebsdaten des elektromotorischen Antriebs 2 und speichert sie entweder komplett oder ausgesucht, z.B. zeitabhängig, belastungsabhängig, errechnet, geschätzt, in der Speichereinrichtung 6a.

Unter dem Begriff "Betriebsdaten" ist z.B. im einfachsten Fall die Häufigkeit eines Überschreitens der Einschaltdauer eines jeweiligen Verstellantriebs 4 zu verstehen. Weiterhin können andere Daten erfasst werden, welche als weitere Betriebsdaten ein Abbild des gesamten geleisteten Betriebs des elektromotorischen Antriebs 2 darstellen, wie beispielsweise maximale Betriebsdauer, durchschnittliche Betriebsdauer, maximale Belastung/Stromaufnahme, durchschnittliche Stromaufnahme, aus den Daten errechnete Werte zur Analyse von Verschleiß, etc. Außerdem können auch zu den Betriebsdaten auch Daten zum Betrieb des Antriebs in Betracht kommen, z.B. Steuersoftware, einzelne Steuerprogramme, Steuerparameter, usw.

Die Übertragungseinrichtung 7 dient bei hergestellter Kommunikationsverbindung zum Datenaustausch der Betriebsdaten, z.B. der gespeicherten Daten in der Speichereinrichtung 6a und in anderen Speichern der Steuervorrichtung 5, und zum Datenaustausch von Steuerdaten zur Bedienung des elektromotorischen Möbelantriebs 2 über die Kommunikationseinrichtung 17 mit dem Datengerät 21, was unten noch im Detail erläutert wird. So kann in einer einfachen Weise nicht nur eine Bedienung des elektromotorischen Möbelantriebs 2 über das Datengerät 21, sondern auch ein Auslesen von Servicedaten, die in der Speichereinrichtung 6a und in anderen Speichern der Steuervorrichtung 5 gespeichert sind, bei hergestellter Kommunikationsverbindung erfolgen. Der jeweilige zugehörige Datenaustausch kann auch bidirektional erfolgen, d.h. die Übertragungseinrichtung 7 ist sowohl zum Senden als auch zum Empfangen von Daten, z.B. Steuerdaten, Grenzwerte, Einstellwerte, Software etc., zum Steuern des elektromotorischen Möbelantriebs 2 und zum Einschreiben in die Speichereinrichtung 6a und in andere Speicher der Steuervorrichtung 5 ausgebildet. Der Datenaustausch wird unten noch weiter erläutert.

Weiterhin ist die Steuervorrichtung 5 mit der Bedienungseinrichtung 10, die unten noch näher beschrieben wird, über eine Steuerverbindung 26 gekoppelt Die Steuerverbindung 26 kann als Drahtverbindung oder/und drahtlose Verbindung, z.B. als Funkstrecke oder Infrarotstrecke ausgeführt sein. In diesem Ausführungsbeispiel ist die Steuerverbindung 26 bidirektional und drahtgebunden ausgebildet. Ein Anschluss der Steuerverbindung 26 an der Steuervorrichtung 5 ist hier beispielsweise eine Steckverbindung in einer geeigneten IP-Schutzart.

Die Energieversorgungseinrichtung 8 steht mit der Steuervorrichtung 5 in elektrischer Verbindung und ist z.B. mit einem Trenntrafo, Gleichrichter und Siebschaltung oder als Schaltnetzteil ausgebildet. Die Energieversorgungseinrichtung 8 ist gemäß der Darstellung nach Figur 1 über ein Netzkabel 9 mit einem Netzstecker 9a verbunden, wobei in einer anderen und nicht näher dargestellten Ausführungsform der Netzstecker 9a an einer ebenfalls nicht gezeigten Netzfreischaltungseinrichtung angeordnet sein kann. In einer anderen Ausgestaltung kann diese Netzfreischaltungseinrichtung in der Energieversorgungseinrichtung 8 integriert sein. Es sei noch erwähnt, dass dann die Energieversorgungseinrichtung 8 gemäß der Darstellung nach Figur 1 mit einem umhüllenden Gehäuse versehen ist, so dass der Netzstecker 9a an dem Gehäuse angesetzt oder angeformt sein kann.

In einer weiterführenden, jedoch nicht näher dargestellten Ausführungsform, ist die Energieversorgungseinrichtung 8 in dem Gehäuse der Steuervorrichtung 5 oder eines Gehäuses 4b der Verstellantriebe 4 eingesetzt oder daran angesetzt, wobei einer oder zwei der Verstellantriebe 4 in nicht näher dargestellter Weise nach Art eines Doppelantriebes aufgebaut sein können, wobei wenigstens ein Elektromotor 4a, jedoch vorzugsweise zwei Elektromotoren 4a in einem gemeinsamen Gehäuse aufgenommen sind.

Die Bedienungseinrichtung 10 umfasst in diesem Ausführungsbeispiel mindestens einen Bedienungsabschnitt 11 mit Schaltbedienungselementen 12, 13, eine Anzeigeeinrichtung 14 und eine Identifizierungseinrichtung 15. Diese Komponenten sind in einem bzw. an einem nicht näher bezeichneten Gehäuse der Bedienungseinrichtung 10 angeordnet.

Eine weitere nicht näher dargestellte Ausführungsform der Anordnung 1 sieht eine netzunabhängige Energieversorgung in Form eines Akkumulators vor. Diese kann zusätzlich zur Energieversorgungseinrichtung 8 angeordnet und damit elektrisch verbunden sein, sie kann die Energieversorgungseinrichtung 8 in einer weiteren Ausführung jedoch auch ersetzen. Dann ist jedoch eine relativ kleine Bauform einer Energieversorgungseinrichtung 8 erforderlich, welche als Ladegerät des Akkumulators ausgebildet ist.

Mittels der Bedienungseinrichtung 10 sind z.B. über Steuerströme die Relaisschalter bzw. die Halbleiterschalter der Steuervorrichtung 5 und somit die Verstellantriebe 4 ein- und ausschaltbar, wobei die Leistungsschalter der Relaisschalter bzw. der Halbleiterschalter den hohen Motorstrom des jeweiligen Verstellantriebs 4 schalten.

Die jeweiligen Funktionen, z.B. Verstellen eines Verstellantriebs 4 in eine Richtung und in Gegenrichtung, können mit den Schaltbedienungselementen 12 und 13 des Bedienungsabschnitts 11 der Bedienungseinrichtung 10 betätigt werden. Es können auch weitere Schaltbedienungselemente 12, 13 für andere, nicht dargestellte Funktionen und Verbraucher, wie z.B. Heizungen, Beleuchtung u.dgl. des elektromotorischen Möbelantriebs 2 des Möbels 3, vorgesehen sein. Die Schaltbedienungselemente 12, 13 können separate Schaltelemente, z.B. Folientaster oder elektromechanische Schalter/Taster, oder/und auf der Anzeigeeinrichtung 14 als Berührungsschalter (Tochscreenschalter) ausgebildet sein.

Die Steuervorrichtung 5 des elektromotorischen Möbelantriebs 2 des Möbels 3, welches in diesem Ausführungsbeispiel ein Hospital-/Pflegebett ist, kann außerdem mit einer weiteren, nur von autorisiertem Personal (Pflegepersonal) benutzbaren, so genannten Sperrbox verbunden sein, mit welcher Steuerfunktionen für den Benutzer gesperrt und freigegeben werden können, was hier nicht näher beschrieben wird.

Die Anzeigeeinrichtung 14 kann in einer einfachen Ausführung nur eine optische Meldeanzeige, z.B. eine Leuchtdiode, für eine jeweils eingeschaltete oder z.B. gesperrte Funktion sein. Es ist aber auch möglich, dass die Anzeigeeinrichtung 14 als ein vollgrafisches Display oder/und ein Display, z.B. mit vorgebrannten Bildern, ausgebildet ist. Dabei kann die einfache Meldeanzeige als Leuchtdiode zusätzlich vorhanden sein.

Die Identifizierungseinrichtung 15 weist einen Identifizierungscode des elektromotorischen Möbelantriebs 2 des Möbels 3 auf und dient zur eindeutigen Identifizierung des elektromotorischen Möbelantriebs 2 des Möbels 3 zur Herstellung der Kommunikationsverbindung des elektromotorischen Möbelantriebs 2 des Möbels 3 mit dem Datengerät 21. Die Kommunikationsverbindung mit dem Datengerät 21 wird dabei durch die Kommunikationseinrichtung 17 in Verbindung mit der Identifizierungseinrichtung 15 und der Übertragungseinrichtung 7 durchgeführt.

In einer ersten, einfachen Variante weist die Identifizierungseinrichtung 15 einen permanenten, optischen Identifizierungscode auf, der sichtbar und/oder maschinenlesbar ist. Dabei ist unter dem Begriff "sichtbar" auch zu verstehen, dass der Identifizierungscode auch nur in einem bestimmten Wellenlängenbereich sichtbar, z.B. nur Infrarotbereich, aber mit entsprechendem Werkzeug lesbar ist, wobei der Identifizierungscode dann für das menschliche Auge nicht sichtbar ist. Der Identifizierungscode kann durch infrarote Lichtsignale gebildet sein, wobei in einer vereinfachten Weise ein spezielles oder ein normiertes Übertragungsprotokoll z.B. nach dem IrDA-Standard (Infrared Data Association) Verwendung findet.

Der Identifizierungscode beinhaltet z.B. die laufende Seriennummer des elektromotorischen Möbelantriebs 2 oder dessen Steuervorrichtung 5 zur Zuordnung der jeweiligen Daten des Datenaustausches zu dem jeweiligen Möbelantrieb 2 oder dessen Steuervorrichtung 5. Der Identifizierungscode kann auch eine andere Zeichenfolge anstelle der oder zusätzlich zur Seriennummer aufweisen.

Dazu ist die Identifizierungseinrichtung 15 dieser ersten Variante auf der Bedienungseinrichtung 10 in geeigneter Weise aufgebracht. Dies kann z.B. auf der Oberfläche des Gehäuses der Bedienungseinrichtung 10 sein, wobei ein Aufbringen durch ein Einlasern, Aufdrucken, einen bedruckten oder geprägten Aufkleber, ein spanendes Einformen, Umformen (Einprägen), Urformen (Einspritzen bei einem Spritzgussgehäuse), Farbfolge, Farbspektrum usw. möglich ist.

Der Anbringungsort dieser ersten Variante Identifizierungseinrichtung 15 ist in diesem Beispiel am Gehäuse der Bedienungseinrichtung 10 angeordnet. Er kann aber auch an deren Aufhängung (Haken) oder allgemein am Gehäuse einer Komponente des elektromotorischen Möbelantriebs 2 (Bedienungseinrichtung 10, Steuervorrichtung 5, Verstellantrieb 4, Kabel [Steuerverbindung 26, Netzanschlusskabel 9, Motoranschlussleitung 4e], Verbindungsgestänge usw. angeordnet sein.

Der Identifizierungscode dieser ersten Variante der Identifizierungseinrichtung 15 kann aber auch an einer dem elektromotorischen Möbelantrieb 2 oder/und dem Möbel 3 zugehörenden Komponente (z.B. in den Serviceunterlagen) angeordnet und/oder angebracht sein.

Eine zweite Variante der Identifizierungseinrichtung 15 weist ein Übertragungselement 16 auf. Das Übertragungselement 16 ist in diesem Ausführungsbeispiel als Leuchtmittel, z.B. Leuchtdiode (LED), ausgebildet. In einer alternativen Ausführung kann die Anzeigeeinrichtung 14 in der einfachen Ausführung als optische Meldeanzeige, z.B. als Leuchtdiode, als Übertragungselement 16 benutzt werden. Der Identifizierungscode ist in dieser Variante in der Identifizierungseinrichtung 15 als gespeicherter Datenwert abgelegt. Es ist auch möglich, dass die Identifizierungseinrichtung 15 dazu ausgebildet ist, den Identifizierungscode als gespeicherten Datenwert aus einem Speicher der Steuervorrichtung 5 oder der Speichereinrichtung 6a auszulesen.

In einer anderen Weise kann die Anzeigeeinrichtung 14 als Übertragungselement 16 ausgebildet sein. Hierbei kann ein vollgrafisches Display als Anzeigeeinrichtung 14 vorgesehen sein, welches einen Strichcode, einen Barcode oder einen zweidimensionalen Matrixcode zur optischen Anzeige bringt, wobei die Anzeigeeinrichtung 14 als LCD-Display ohne Hintergrundbeleuchtung ausgebildet sein kann, in einer bevorzugten Ausführung jedoch eine Beleuchtungseinrichtung aufweist oder eine Anzeigeeinrichtung 14 als vollgrafisch ausgebildetes Display ist selbstleuchtend ausgestaltet.

Es soll noch ein wesentlicher Vorteil der optischen Übertragungsstrecke und der optischen Identifizierungseinrichtung 15 sowie des optischen Übertragungselementes 16 genannt sein. Die Richtung und die Intensität dieser Übertragungsstrecken lassen sich sehr leicht bestimmen und einrichten. Ein beispielsweise als gelbe Leuchtdiode ausgebildetes Übertragungselement 16 weist üblicherweise einen geringen Lichtabstrahlwinkel auf und weist üblicherweise eine geringe Leuchtkraft auf, so dass die davon abgehende Datensendung naturgemäß eine geringe Reichweite von etwa 10 Zentimetern aufweist. Hierzu kann noch der Leuchtdiode ein Reichweitenreduzierbaustein beispielsweise in Form eines Widerstandes oder anderweitig mit Spannungsbegrenzungseigenschaften vorgeschaltet sein. Der wesentliche Vorteil besteht darin, dass ein anderes gleichartiges Möbel, welches unweit von dem Möbel 3 aufgestellt ist, zur Identifizierung ausgeschlossen ist und nur das Möbel 3 identifiziert wird.

Der von der Identifizierungseinrichtung 15 gespeicherte oder ausgelesene Datenwert des Identifizierungscodes wird dann von der Identifizierungseinrichtung 15 so angepasst, um ihn als ein optisches Signal, z.B. eine Folge von optischen Helligkeitsimpulsen, mittels des Übertragungselementes 16 auszugeben.

Der von der Identifizierungseinrichtung 15 bereitgestellte Identifizierungscode wird über die erste Übertragungsstrecke 24 an die Kommunikationseinrichtung 17 des Datengerätes 21 übertragen. Die Kommunikationseinrichtung 17 umfasst hier eine Kommunikationssteuereinheit 17a, eine Identifiziereinheit 18 mit einem Identifizierelement 19 und eine Übertragungseinheit 20.

Das Identifizierelement 19 ist zum Lesen des von der Identifizierungseinrichtung 15 bereitgestellten Identifizierungscode ausgebildet.

Die Art des Identifizierungscode kann z.B. eine Ziffernfolge, ein Barcode, ein 2D-Barcode, ein Raster aber auch ein Leuchtcode sein.

In der ersten Variante der Identifizierungseinrichtung 15 ist das Identifizierelement 19 z.B. eine Kamera, welche den optisch lesbaren Identifizierungscode aufnimmt, abbildet und in nicht näher erläuterter Weise an die Identifiziereinheit 18 weiterleitet. Wenn der Identifizierungscode z.B. ein Barcode ist, kann das Identifizierelement 19 z.B. eine entsprechende Barcodeleseeinrichtung sein.

Bei der zweiten Variante der Identifizierungseinrichtung 15 ist das Identifizierelement 19 z.B. als ein Fototransistor, ein geeignetes Empfangs-/Sendeelement, oder Fototransistor und Sendediode ausgebildet. Das Identifizierelement 15 empfängt die optischen Impulse oder Signale, welche den Identifizierungscode enthalten, von dem Übertragungselement 16 und leitet sie an die Identifiziereinheit 18 weiter.

Die erste Übertragungsstrecke 24 kann bei der zweiten Variante auch bidirektional ausgebildet sein, wobei z.B. das Identifizierelement 19 ein Startsignal, Quittierungssignal, Fragesignal oder dergleichen, das durch die Identifiziereinheit 18 erzeugt wird, an die Identifizierungseinrichtung 15 sendet. Die erste Übertragungsstrecke 24 ist hier vorzugsweise drahtlos und optisch ausgebildet.

So kann bei der zweiten Variante mit bidirektionaler erster Übertragungsstrecke 24 der Identifizierungscode z.B. alternativ so angefordert werden, dass ein Meldemittel, z.B. eine farbige LED, diese Anforderung anzeigt. Daraufhin kann ein Benutzer den Identifizierungscode auf unterschiedlichste Art und Weise, z.B. durch Tastenbetätigung (spezielle Taste, Tastenkombinationen, online per Email, über Mobilfunk per SMS usw.), eingeben oder veranlassen, dass der Identifizierungscode bereitgestellt und übertragen wird.

Die Identifiziereinheit 18 prüft den von dem Identifizierelement 19 empfangenen Identifizierungscode und/oder vergleicht ihn mit einem in der Kommunikationseinrichtung 17 gespeicherten Wert. Wenn der Identifizierungscode auf diese Weise erkannt worden ist, führt die Kommunikationssteuereinheit 17a eine Freigabe der Übertragungseinheit 20 der Kommunikationseinrichtung 17 für die Herstellung der Kommunikationsverbindung mit der Übertragungseinrichtung 7 der Steuervorrichtung 5 des elektromotorischen Möbelantriebs 2 über eine zweite, hier bidirektionale, Übertragungsstrecke 25 durch. Die zweite Übertragungsstrecke 25 ist hier vorzugsweise eine drahtlose Funkstrecke, sie kann aber auch alternativ optisch, z.B. als Infrarotstrecke, akustisch, z.B. Ultraschallübertragung, induktiv, kapazitiv ausgebildet sein.

Die Übertragungseinrichtung 7 der Steuervorrichtung 5 des elektromotorischen Möbelantriebs 2 ist mit einem Sender/Empfänger für die zweite, bidirektionale Übertragungsstrecke 25 ausgestattet, um mit der Übertragungseinheit 20 der Kommunikationseinrichtung 17 zu kommunizieren.

Die Kommunikationssteuereinheit 17a der Kommunikationseinrichtung 17 ihrerseits überträgt die Daten des Datenaustausches über die Verbindung 22 an das Datengerät 21 und zurück. Die Verbindung 22 ist hier auch bidirektional ausgebildet.

Auf diese Weise erfolgt eine eindeutige Zuordnung zwischen dem Datengerät 21 und dem elektromotorischen Möbelantrieb 2 bei der Herstellung der Kommunikationsverbindung. Weiterhin ist dadurch auch eine Synchronisation des Datensaustausches über die zweite Übertragungsstrecke 25 gewährleistet. Eine Unterbrechung der Steuerverbindung 26 durch Entfernen der Bedienungseinrichtung 10 bzw. Installieren oder Einstecken einer zusätzlichen Drahtverbindung ist nicht erforderlich.

Die erste Übertragungsstrecke 24 und die zweite Übertragungsstrecke 25 sind in dem ersten Ausführungsbeispiel örtlich an verschiedenen Stellen angeordnet und werden zeitlich nacheinander betrieben. D.h., die erste Übertragungsstrecke 24 ist zwischen der Identifizierungseinrichtung 15 der Bedienungseinrichtung 10 und der Identifiziereinheit 18 der Kommunikationseinrichtung 17 angeordnet, wobei die zweite Übertragungsstrecke 25 zwischen der Übertragungseinrichtung 7 der Steuervorrichtung 5 und der Übertragungseinheit 20 der Kommunikationseinrichtung 17 angeordnet ist.

Die Kommunikationseinrichtung 17 kann als Zusatzteil, z.B. als USB-Stick oder so genannter Dongle ausgebildet sein. Zur Durchführung der Identifikation über die erste Übertragungsstrecke 24 wird die Kommunikationseinrichtung 17 mit dem Identifizierelement 19 auf der Bedienungseinrichtung 10 so platziert, dass das Identifizierelement 19 auf dem Übertragungselement 16 angeordnet bzw. mit diesem in Deckung oder in optischer Sichtverbindung ist. Ein Starten des Identifiziervorgangs kann über das Datengerät 21 erfolgen. Es ist auch möglich, dass nur durch Betätigung irgendeines Schaltbedienungselementes 12, 13 des Bedienungsabschnitts 11 oder eines dafür vorgesehenen (nicht gezeigten) Bedienungselementes der Bedienungseinrichtung 10 der Identifiziervorgang zur Herstellung der Kommunikationsverbindung aktiviert wird.

Alternativ kann die Kommunikationseinrichtung 17 vollständig oder teilweise in dem Datengerät 21 integriert sein, beispielsweise kann eine Webcam des Datengerätes 21 oder eine andere Kamera oder eine Sende-Empfangs-Einrichtung mit Bluetooth wireless Technology als Identifizierelement 19 verwendet werden.

Die hergestellte Kommunikationsverbindung sowie Datenaustauschvorgänge können durch ein oder mehrere weitere Anzeigemittel angezeigt werden.

Figur 2 zeigt die schematische Blockdarstellung nach Figur 1 mit einem zweiten Ausführungsbeispiel des erfindungsgemäßen elektromotorischen Möbelantriebs 2.

Im Unterschied zu dem ersten Ausführungsbeispiel nach Figur 1 sind im zweiten Ausführungsbeispiel die erste Übertragungsstrecke 24 und die zweite Übertragungsstrecke 25 örtlich an gleicher Stelle angeordnet, wobei die zweite Übertragungsstrecke 25 über die Steuerverbindung 26 verläuft. Die erste Übertragungsstrecke 24 und die zweite Übertragungsstrecke 25 werden in dem zweiten Ausführungsbeispiel aber auch zeitlich nacheinander betrieben.

Weiterhin ist in dem zweiten Ausführungsbeispiel bevorzugt, dass die erste Übertragungsstrecke 24 und die zweite Übertragungsstrecke 25 zwischen der Identifizierungseinrichtung 15 der Bedienungseinrichtung 10 und der Identifiziereinheit 18 der Kommunikationseinrichtung 17 als optische, bidirektionale Übertragungsstrecken ausgebildet sind.

Die Identifiziereinheit 18 und die Übertragungseinheit 20 der Kommunikationseinrichtung 17 sind hier über eine Übertragungsverbindung 27 miteinander verbunden. Die Übertragungsverbindung 27 ist eine bidirektionale, hier drahtgebundene Übertragungsstrecke.

Der Identifiziervorgang findet im zweiten Ausführungsbeispiel wie im ersten Ausführungsbeispiel über die erste Übertragungsstrecke 24 statt.

Sobald die Identifizierung durch die Identifiziereinheit 18 abgeschlossen ist, erfolgt über die Kommunikationssteuereinheit 17a die Freigabe zur Herstellung der Kommunikationsverbindung, wobei die Übertragungseinheit 20 aktiviert wird. Die Übertragungseinheit 20 wird dann durch die Übertragungsverbindung 27 mit der Identifiziereinheit 18 verbunden und überträgt durch die nun zwischen dem Identifizierelement 19 und dem Übertragungselement 16 eingerichtete zweite Übertragungsstrecke 25, die zuvor die erste Übertragungsstrecke 24 bildete, die jeweiligen Daten über die hergestellte Kommunikationsverbindung. Dabei wird die Kommunikationsverbindung mit der Übertragungseinrichtung 7 der Steuervorrichtung 5 des elektromotorischen Möbelantriebs 2 derart hergestellt, dass die Steuerverbindung 26 als zweite Übertragungsstrecke mitbenutzt wird. Somit weist die zweite Übertragungsstrecke 25 drei Bestandteile auf, nämlich die drahtgebundene Übertragungsverbindung 27, die optische erste Übertragungsstrecke 24 und die drahtgebundene Steuerverbindung 26.

In einer Variante ist es möglich, dass die optische Meldeanzeige der Anzeigeeinrichtung 14 in der einfachen Ausführung, z.B. eine Leuchtdiode, als das Übertragungselement 16 verwendet wird.

Weiterhin kann das Übertragungselement 16 mit der Identifizierungseinrichtung 15 bei jeder Betätigung eines Schaltbedienungselementes 12, 13 des Bedienungsabschnitts 11 der Bedienungseinrichtung 10 sowohl den Identifizierungscode als auch in zeitlicher Folge danach die Datenwerte eines Datenaustausches der Betriebsdaten bereitstellen bzw. senden. Das Senden des Identifizierungscodes und der Datenwerte erfolgen mit einer so hohen Frequenz, dass sie für einen Benutzer nicht erkennbar sind und nur ein normales Leuchten des Anzeigemittels wahrgenommen wird.

Auch in dem zweiten Ausführungsbeispiel ist ein Umstecken, Austauschen oder Entfernen der Bedienungseinrichtung 10 oder Installieren einer neuen Drahtverbindung zu dem Datengerät 21 nicht notwendig, um eine Kommunikation des elektromotorischen Möbelantriebs 2 mit dem Datengerät 21 herzustellen.

Auch hierbei kann alternativ die Kommunikationseinrichtung 17 vollständig oder teilweise in dem Datengerät 21 integriert sein, beispielsweise kann eine Webcam des Datengerätes 21 oder eine andere Kamera oder eine Sende-Empfangs-Einrichtung mit Bluetooth wireless Technology als Identifizierelement 19 verwendet werden.

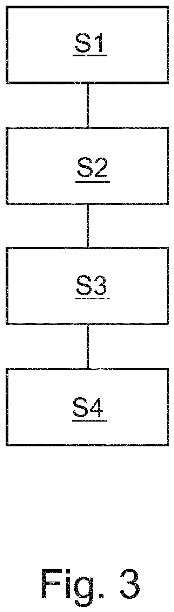

In Figur 3 ist ein schematisches Flussdiagramm eines Ausführungsbeispiels eines erfindungsgemäßen Verfahrens zum Herstellen einer Kommunikationsverbindung zwischen dem elektromotorischen Möbelantrieb 2 des Möbels 3 und dem Datengerät 21 dargestellt.

Zunächst wird in einem ersten Verfahrensschritt S1 ein Identifizierungscode des elektromotorischen Möbelantriebs 2 des Möbels 3 bereitgestellt. Die Bereitstellung kann automatisch erfolgen, sie kann aber auch z.B. mittels des Datengerätes 21 menügesteuert angefordert werden, wobei z.B. eine entsprechende Anzeige auf dem Bildschirm des Datengerätes 21 erscheint.

Dann erfolgt in einem zweiten Verfahrensschritt S2 ein Übertragen des Identifizierungscodes über die erste Übertragungsstrecke 24 zwischen der Identifizierungseinrichtung 15 und der Identifiziereinheit 18. Das Übertragen erfolgt optisch, wie oben bereits beschrieben.

In einem dritten Verfahrensschritt S3 erfolgt ein Prüfen des empfangenen Identifizierungscodes mittels Vergleich mit vorher gespeicherten Datenwerten. Bei positivem Prüfungsergebnis erfolgt eine Zuordnung des so erkannten Identifizierungscode des elektromotorischen Möbelantriebs 2 zu vorher gespeicherten Daten.

Schließlich wird in einem vierten Verfahrensschritt S4 die Kommunikationsverbindung zwischen dem elektromotorischen Möbelantrieb 2 des Möbels 3 und dem Datengerät 21 hergestellt, wobei die zweite Übertragungsstrecke 25 zwischen der Übertragungseinheit 20 und der Übertragungseinrichtung 6 der Steuervorrichtung 5 des elektromotorischen Möbelantriebs 2 verwendet wird.

Die so hergestellte Kommunikationsverbindung zwischen dem elektromotorischen Möbelantrieb 2 des Möbels 3 und dem Datengerät 21 ermöglicht es auch, dass z.B. mehrere in einem Patientenzimmer vorhandene Möbel 3 mit gleichen oder unterschiedlichen elektromotorischen Möbelantrieben 2 eindeutig identifziert und dem jeweiligen Datengerät 21 zugeordnet sind, auch wenn die Möbel 3 in unmittelbarer Nähe zueinander stehen.

Die oben beschriebenen Ausführungsbeispiele schränken die Erfindung, welche im Rahmen der beigefügten Ansprüche modifizierbar ist, nicht ein.

Die Energieversorgungseinrichtung 7 kann mit einer Hilfsenergiequelle versehen sein, welche z.B. eine Batterie, ein Akkumulator oder/und ein Kondensator sein kann. Damit wird auch eine Notabsenkungsfunktion möglich. Es ist auch möglich, dass die Energieversorgungseinrichtung 7 eine Batterie und/oder ein Akkumulator ist.

Es ist auch denkbar, dass in dem zweiten Ausführungsbeispiel die Übertragungseinrichtung 7 in der Bedienungseinrichtung 10 angeordnet ist.

### Bezugszeichenliste

- 1: Anordnung
- 2: Elektromotorischer Möbelantrieb
- 3: Möbel
- 4: Verstellantrieb
- 4a: Elektromotor
- 4b: Antriebsgehäuse
- 4c: Hubrohr
- 4d: Gabelkopf
- 4e: Motoranschlussleitung
- 5: Steuervorrichtung
- 6: Erfassungseinrichtung
- 6a: Speichereinrichtung
- 7: Übertragungseinrichtung
- 8: Energieversorgungseinrichtung
- 9: Netzanschlusskabel
- 9a: Netzstecker
- 10: Bedienungseinrichtung
- 11: Bedienungsabschnitt
- 12, 13: Schaltbedienungselemente
- 14: Anzeigeeinrichtung
- 15: Identifizierungseinrichtung
- 16: Übertragungselement
- 17: Kommunikationseinrichtung
- 17a: Kommunikationssteuereinheit
- 18: Identifiziereinheit
- 19: Identifizierelement
- 20: Übertragungseinheit
- 21: Datengerät
- 22: Verbindung
- 23: Anschluss
- 24: Erste Übertragungsstrecke
- 25: Zweite Übertragungsstrecke
- 26: Steuerverbindung
- 27: Übertragungsverbindung
- S1...4: Verfahrensschritt

## Patentansprüche

1. Anordnung (1), umfassend einen elektromotorischen Möbelantrieb (2) mit einer Steuervorrichtung (5), einer Energieversorgungseinrichtung (8), und mindestens einer Bedienungseinrichtung (10); zumindest ein Möbel (3), in welches der elektromotorische Möbelantrieb (2) eingebaut ist; und ein Datengerät (21), wobei der elektromotorische Möbelantrieb (2) und das Datengerät (21) in einer Kommunikationsverbindung stehen, wobei
die Kommunikationsverbindung zwischen dem elektromotorischen Möbelantrieb (2) und dem Datengerät (21) eine erste Übertragungsstrecke (24), welche zur Übertragung eines Identifizierungscodes des elektromotorischen Möbelantriebs (2) vorgesehen ist, und eine zweite Übertragungsstrecke (25), welche zur Übertragung von Steuerdaten und/oder Betriebsdaten des elektromotorischen Möbelantriebs (2) vorgesehen ist, aufweist,
**dadurch gekennzeichnet,**
**dass** eine Identifizierungseinrichtung (15) zur Bereitstellung des Identifizierungscodes des elektromotorischen Möbelantriebs (2) des Möbels (3) für eine Übertragung über die erste Übertragungsstrecke (24) zwischen der Identifizierungseinrichtung (15) und einer Kommunikationseinrichtung (17) des Datengerätes (21) vorgesehen ist, wobei die Kommunikationseinrichtung (17) zur Prüfung und/oder zum Vergleich des empfangenen Identifizierungscodes mit vorher gespeicherten Datenwerten und zur Freigabe zur Herstellung der Kommunikationsverbindung über die zweite Übertragungsstrecke (25), wenn der Identifizierungscode erkannt worden ist, ausgebildet ist.

2. Anordnung (1) nach Anspruch 1, **dadurch gekennzeichnet, dass** die erste Übertragungsstrecke (24) drahtlos ausgebildet ist, und dass die zweite Übertragungsstrecke (25) mindestens teilweise drahtlos ausgebildet ist, wobei die erste Übertragungsstrecke (24) und die zweite Übertragungsstrecke (25) zwischen dem elektromotorischen Möbelantrieb (2) und der mit dem Datengerät (21) verbundenen Kommunikationseinrichtung (17) angeordnet sind.

3. Anordnung (1) nach Anspruch 1 oder 2, **dadurch gekennzeichnet, dass** mindestens eine der beiden Übertragungsstrecken (24, 25) bidirektional ausgebildet ist.

4. Anordnung (1) nach einem der vorhergehenden Ansprüche, **dadurch gekennzeichnet, dass** der elektromotorische Möbelantrieb (2) mit einer Übertragungseinrichtung (7) für die zweite Übertragungsstrecke (25) ausgerüstet ist, wobei die Kommunikationseinrichtung (17) eine Identifiziereinheit (18) für die erste Übertragungsstrecke (24) und eine Übertragungseinheit (20) für die zweite Übertragungsstrecke (25) aufweist.

5. Anordnung (1) nach Anspruch 4, **dadurch gekennzeichnet, dass** die Identifizierungseinrichtung (15) an oder/und in der Bedienungseinrichtung (10) oder an oder/und in einem Teil des elektromotorischen Möbelantriebs (2) angeordnet ist.

6. Anordnung (1) nach Anspruch 5, **dadurch gekennzeichnet, dass** die Identifizierungseinrichtung (15) als ein Identifizierungscode durch Einlasern, Aufdrucken, einen bedruckten oder geprägten Aufkleber, ein spanendes Einformen, Umformen (Einprägen), Urformen (Einspritzen bei einem Spritzgussgehäuse), Farbfolge, oder/und Farbspektrum auf- oder/und angebracht ist.

7. Anordnung (1) nach Anspruch 5, **dadurch gekennzeichnet, dass** die Identifizierungseinrichtung (15) einen gespeicherten Datenwert eines Identifizierungscodes aufweist und für eine Ausgabe des Identifizierungscodes als ein optisches Signal mittels eines Übertragungselementes (16) ausgebildet ist.

8. Anordnung (1) nach mindestens einem der Ansprüche 4 bis 7, **dadurch gekennzeichnet, dass** die erste Übertragungsstrecke (24) zwischen der Identifizierungseinrichtung (15) und der Identifiziereinheit (18) angeordnet ist, wobei die zweite Übertragungsstrecke (25) zwischen der Übertragungseinrichtung (7) und der Übertragungseinheit (20) angeordnet ist.

9. Anordnung (1) nach Anspruch 8, **dadurch gekennzeichnet, dass** die erste Übertragungsstrecke (24) eine optische Übertragungsstrecke ist, und dass die zweite Übertragungsstrecke (25) eine Funkstrecke ist.

10. Anordnung (1) nach mindestens einem der Ansprüche 4 bis 7, **dadurch gekennzeichnet, dass** die erste Übertragungsstrecke (24) und die zweite Übertragungsstrecke (25) zwischen der Identifizierungseinrichtung (15) und der Identifiziereinheit (18) angeordnet sind.

11. Anordnung (1) nach mindestens einem der vorhergehenden Ansprüche, **dadurch gekennzeichnet, dass** die Kommunikationseinrichtung (17) als ein separates Zusatzteil ausgebildet ist.

12. Anordnung (1) nach mindestens einem der vorhergehenden Ansprüche, **dadurch gekennzeichnet, dass** die Kommunikationseinrichtung (17) mindestens teilweise in dem Datengerät (21) integriert ist.

13. Anordnung (1) nach mindestens einem der vorhergehenden Ansprüche, **dadurch gekennzeichnet, dass** der elektromotorische Antrieb (2) eine Erfassungseinrichtung (6) zur Erfassung von Betriebsdaten des elektromotorischen Antriebs (2) aufweist.

14. Verfahren zum Herstellen einer Kommunikationsverbindung zwischen einem elektromotorischen Möbelantrieb (2) eines Möbels (3) und einem Datengerät (21) einer Anordnung nach mindestens einem der vorhergehenden Ansprüche, **gekennzeichnet durch** die Verfahrensschritte
(S1) Bereitstellen eines Identifizierungscodes des elektromotorischen Möbelantriebs (2) des Möbels (3) mittels einer Identifizierungseinrichtung (15) des elektromotorischen Möbelantriebs (2);
(S2) Übertragen des von der Identifizierungseinrichtung (15) bereitgestellten Identifizierungscodes über eine erste Übertragungsstrecke (24) zwischen der Identifizierungseinrichtung (15) und einer Kommunikationseinrichtung (17) des Datengerätes (21);
(S3) Identifizieren des elektromotorischen Möbelantriebs (2) durch Prüfen und/oder Vergleichen des empfangenen Identifizierungscodes mit vorher gespeicherten Werten; und
(S4) Freigeben eines Herstellens der Kommunikationsverbindung über eine zweite Übertragungsstrecke (25) zwischen dem elektromotorischen Möbelantrieb (2) des Möbels (3) und der Kommunikationseinrichtung (17) des Datengerätes (21) und Verwenden einer zweiten Übertragungsstrecke (25) zwischen dem elektromotorischen Möbelantrieb (2) und der Kommunikationseinrichtung (17) des Datengerätes (21), wenn der Identifizierungscode erkannt worden ist.

15. Verfahren nach Anspruch 14, **dadurch gekennzeichnet, dass** im Verfahrensschritt (S1) das Bereitstellen des Identifizierungscodes automatisch oder menügesteuert durch das Datengerät (21) erfolgt.

16. Verfahren nach Anspruch 14 oder 15, **dadurch gekennzeichnet, dass** das Übertragen im Verfahrensschritt (S2) optisch erfolgt, wobei das Übertragen im Verfahrensschritt (S2) ein Abbilden des Identifizierungscodes mittels eines optischen Gerätes aufweist..

17. Verfahren nach Anspruch 16, **dadurch gekennzeichnet, dass** das Übertragen im Verfahrensschritt (S2) ein Lesen des Identifizierungscodes durch einen Benutzer und Eingeben mittels einer Tastatur aufweist.

18. Verfahren nach Anspruch 16, **dadurch gekennzeichnet, dass** das Übertragen im Verfahrensschritt (S2) ein Senden des Identifizierungscodes mittels Lichtsignalen aufweist.

19. Elektromotorischer Möbelantrieb (2) einer Anordnung (1) nach einem der Ansprüche 1 bis 13, mit einer Steuervorrichtung (5), einer Energieversorgungseinrichtung (8), einer Bedienungseinrichtung (10), wobei der elektromotorische Möbelantrieb (2) für eine Kommunikationsverbindung mit einem zuzuordnenden Datengerät (21) der Anordnung (1) vorgesehen ist,
**dadurch gekennzeichnet,**
**dass** der elektromotorische Möbelantrieb (2) mit einer Identifizierungseinrichtung (15) für eine erste Übertragungsstrecke (24) der Kommunikationsverbindung und mit einer Übertragungseinrichtung (7) für eine zweite Übertragungsstrecke (25) der Kommunikationsverbindung ausgerüstet ist.

## Claims

1. An arrangement (1) comprising an electromotive furniture drive (2) having a control device (5), a power supply apparatus (8), and at least one operating apparatus (10); at least one piece of furniture (3), in which the electromotive furniture drive (2) is installed; and a data device (21), wherein the electromotive furniture drive (2) and the data device (21) have a communication connection, wherein
the communication connection between the electromotive furniture drive (2) and the data device (21) has a first transmission path (24), which is provided for transmitting an identification code of the electromotive furniture drive (2), and a second transmission path (25), which is provided for transmitting control data and/or operating data of the electromotive furniture drive (2), **characterized in that**
an identification apparatus (15) for providing the identification code of the electromotive furniture drive (2) of the piece of furniture (3) is provided for transmission via the first transmission path (24) between the identification apparatus (15) and a communication apparatus (17) of the data device (21), wherein
the communication apparatus (17) is designed for checking and/or comparing the received identification code to previously stored data values and for carrying out a release for the establishment of the communication connection via a second transmission path (25), if the identification code has been recognized.

2. The arrangement (1) as claimed in claim 1, **characterized in that** the first transmission path (24) is implemented as wireless, and the second transmission path (25) is implemented as at least partially wireless, the wherein the first transmission path (24) and the second transmission path (25) are arranged between the electromotive furniture drive (2) and the communication apparatus (17) connected to the data device (21).

3. The arrangement (1) according to Claim 1 or 2, **characterized in that** at least one of the two transmission paths (24, 25) is implemented as bidirectional.

4. The arrangement (1) according to one of the preceding claims
**characterized in that** the electromotive furniture drive (2) is equipped with a transmission apparatus (7) for the second transmission path (25), wherein the communication apparatus (17) has an identification unit (18) for the first transmission path (24) and a transmission unit (20) for the second transmission path (25).

5. The arrangement (1) according to Claim 4, **characterized in that** the identification apparatus (15) is arranged on and/or in the operating apparatus (10) or on and/or in a part of the electromotive furniture drive (2).

6. The arrangement (1) according to Claim 5, **characterized in that** the identification apparatus (15) is applied and/or attached as an identification code by laser engraving, imprinting, an imprinted or embossed sticker, cutting shaping, reshaping (embossing), molding (injection molding in the case of an injection molded housing), color sequence, and/or color spectrum.

7. The arrangement (1) according to Claim 5, **characterized in that** the identification apparatus (15) has a stored data value of an identification code and is implemented for an output of the identification code as an optical signal by means of a transmission element (16).

8. The arrangement (1) according to at least one of Claims 4 to 7, **characterized in that** the first transmission path (24) is arranged between the identification apparatus (15) and the identification unit (18), wherein the second transmission path (25) is arranged between the transmission apparatus (7) and the transmission unit (20).

9. The arrangement (1) according to Claim 8, **characterized in that** the first transmission path (24) is an optical transmission path, and the second transmission path (25) is a radio path.

10. The arrangement (1) according to at least one of Claims 4 to 7, **characterized in that** the first transmission path (24) and the second transmission path (25) are arranged between the identification apparatus (15) and the identification unit (18).

11. The arrangement (1) according to at least one of the preceding claims, **characterized in that** the communication apparatus (17) is implemented as a separate auxiliary part.

12. The arrangement (1) according to at least one of the preceding claims, **characterized in that** the communication apparatus (17) is at least partially integrated in the data device (21).

13. The arrangement (1) according to at least one of the preceding claims, **characterized in that** the electromotive drive (2) has an acquisition apparatus (6) for acquiring operating data of the electromotive drive (2).

14. A method for establishing a communication connection between an electromotive furniture drive (2) of a piece of furniture (3) and a data device (21) of an arrangement according to at least one of the preceding claims, **characterized by** the following method steps
(S1) providing an identification code of the electromotive furniture drive (2) of the piece of furniture (3) by means of an identification apparatus (15) of the electromotive furniture drive (2);
(S2) transmitting the identification code provided by the identification apparatus (15) via a first transmission path (24) between the identification apparatus (15) and a communication apparatus (17) of the data device (21);
(S3) identifying the electromotive furniture drive (2) by checking and/or comparing the received identification code to previously stored data values; and
(S4) carrying out a release for establishing the communication connection via a second transmission path (25) between the electromotive furniture drive (2) of the piece of furniture (3) and the communication apparatus (17) of the data device (21) and using a second transmission path (25) between the electromotive furniture drive (2) and the communication apparatus (17) of the data device (21), if the identification code has been recognized.

15. The method according to Claim 14, **characterized in that**, in method step (S1), the provision of the identification code is performed automatically or in a menu-controlled manner by the data device (21).

16. The method according to Claim 14 or 15, **characterized in that** the transmission in method step (S2) occurs optically, wherein the transmission in method step (S2) comprises an imaging of the identification code by means of an optical device.

17. The method according to Claim 16, **characterized in that** the transmission in method step (S2) comprises a reading of the identification code by a user and input by means of a keyboard.

18. The method according to Claim 16, **characterized in that** the transmission in method step (S2) comprises a transmission of the identification code by means of light signals.

19. An electromotive furniture drive (2) of an arrangement (1) according to one of Claims 1 to 13, having a control device (5), a power supply apparatus (8), an operating apparatus (10), wherein the electromotive furniture drive (2) is provided for a communication connection to a data device (21), which is to be assigned, of the arrangement (1),
**characterized in that** the electromotive furniture drive (2) is equipped with an identification apparatus (15) for a first transmission path (24) of the communication connection and with a transmission apparatus (7) for a second transmission path (25) of the communication connection.

## Revendications

1. Agencement (1), comprenant un entraînement de meuble électromotorisé (2) avec un dispositif de commande (5), un moyen d'alimentation en énergie (8) et au moins un moyen de manoeuvre (10) ; au moins un meuble (3) dans lequel l'entraînement de meuble électromotorisé (2) est intégré ; et un appareil de données (21), l'entraînement de meuble électromotorisé (2) et l'appareil de données (21) étant en liaison de communication, dans lequel
la liaison de communication entre l'entraînement de meuble électromotorisé (2) et l'appareil de données (21) présente une première voie de transmission (24) qui est prévue pour transmettre un code d'identification de l'entraînement de meuble électromotorisé (2) et une seconde voie de transmission (25) qui est prévue pour transmettre des données de commande et/ou des données de fonctionnement de l'entraînement de meuble électromotorisé (2),
**caractérisé en ce**
**qu'**un moyen d'identification (15) est prévu pour fournir le code d'identification de l'entraînement de meuble électromotorisé (2) du meuble (3) pour une transmission sur la première voie de transmission (24) entre le moyen d'identification (15) et un moyen de communication (17) de l'appareil de données (21), le moyen de communication (17) étant conçu pour vérifier et/ou comparer le code d'identification reçu avec des valeurs de données préalablement mémorisées et pour autoriser l'établissement de la liaison de communication sur la seconde voie de transmission (25) lorsque le code d'identification a été reconnu.

2. Agencement (1) selon la revendication 1, **caractérisé en ce que** la première voie de transmission (24) est conçue sans fil, et **en ce que** la seconde voie de transmission (25) est conçue au moins partiellement sans fil, la première voie de transmission (24) et la seconde voie de transmission (25) étant disposées entre l'entraînement de meuble électromotorisé (2) et le moyen de communication (17) relié à l'appareil de données (21).

3. Agencement (1) selon la revendication 1 ou 2, **caractérisé en ce qu'**au moins l'une des deux voies de transmission (24, 25) est conçue bidirectionnelle.

4. Agencement (1) selon l'une des revendications précédentes, **caractérisé en ce que** l'entraînement de meuble électromotorisé (2) est équipé d'un moyen de transmission (7) pour la seconde voie de transmission (25), le moyen de communication (17) présentant une unité d'identification (18) pour la première voie de transmission (24) et une unité de transmission (20) pour la seconde voie de transmission (25).

5. Agencement (1) selon la revendication 4, **caractérisé en ce que** le moyen d'identification (15) est disposé sur ou/et dans le moyen de manoeuvre (10) ou sur ou/et dans une partie de l'entraînement de meuble électromotorisé (2).

6. Agencement (1) selon la revendication 5, **caractérisé en ce que** le moyen d'identification (15) est appliqué et/ou apposé sous la forme d'un code d'identification par gravure laser, impression, autocollant imprimé ou gaufré, mise en forme par enlèvement de copeaux, formage (estampage), formage primaire (injection dans le cas d'un boîtier moulé par injection), suite de couleurs et/ou spectre de couleurs.

7. Agencement (1) selon la revendication 5, **caractérisé en ce que** le moyen d'identification (15) présente une valeur de données mémorisée d'un code d'identification et est conçu pour délivrer le code d'identification sous la forme d'un signal optique au moyen d'un élément de transmission (16).

8. Agencement (1) selon au moins l'une des revendications 4 à 7, **caractérisé en ce que** la première voie de transmission (24) est disposée entre le moyen d'identification (15) et l'unité d'identification (18), la seconde voie de transmission (25) étant disposée entre le moyen de transmission (7) et l'unité de transmission (20).

9. Agencement (1) selon la revendication 8, **caractérisé en ce que** la première voie de transmission (24) est une voie de transmission optique et **en ce que** la seconde voie de transmission (25) est une liaison radio.

10. Agencement (1) selon au moins l'une des revendications 4 à 7, **caractérisé en ce que** la première voie de transmission (24) et la seconde voie de transmission (25) sont disposées entre le moyen d'identification (15) et l'unité d'identification (18).

11. Agencement (1) selon au moins l'une des revendications précédentes, **caractérisé en ce que** le moyen de communication (17) est réalisé sous la forme d'une partie supplémentaire séparée.

12. Agencement (1) selon au moins l'une des revendications précédentes, **caractérisé en ce que** le moyen de communication (17) est au moins partiellement intégré dans l'appareil de données (21).

13. Agencement (1) selon au moins l'une des revendications précédentes, **caractérisé en ce que** l'entraînement électromotorisé (2) présente un moyen de détection (6) pour détecter des données de fonctionnement de l'entraînement électromotorisé (2).

14. Procédé pour établir une liaison de communication entre un entraînement de meuble électromotorisé (2) d'un meuble (3) et un appareil de données (21) d'un agencement selon au moins l'une des revendications précédentes, **caractérisé par** les étapes de procédé consistant à
(S1) fournir un code d'identification de l'entraînement de meuble électromotorisé (2) du meuble (3) au moyen d'un moyen d'identification (15) de l'entraînement de meuble électromotorisé (2) ;
(S2) transmettre le code d'identification fourni par le moyen d'identification (15) sur une première voie de transmission (24) entre le moyen d'identification (15) et un moyen de communication (17) de l'appareil de données (21) ;
(S3) identifier l'entraînement de meuble électromotorisé (2) par vérification et/ou comparaison du code d'identification reçu avec des valeurs préalablement mémorisées ; et
(S4) autoriser l'établissement d'une liaison de communication sur une seconde voie de transmission (25) entre l'entraînement de meuble électromotorisé (2) du meuble (3) et le moyen de communication (17) de l'appareil de données (21) et utiliser une seconde voie de transmission (25) entre l'entraînement de meuble électromotorisé (2) et le moyen de communication (17) de l'appareil de données (21) lorsque le code d'identification a été reconnu.

15. Procédé selon la revendication 14, **caractérisé en ce que**, à l'étape de procédé (S1), le code d'identification est fourni automatiquement ou au moyen d'un menu par l'appareil de données (21).

16. Procédé selon la revendication 14 ou 15, **caractérisé en ce qu'**à l'étape de procédé (S2), la transmission a lieu optiquement, la transmission à l'étape de procédé (S2) présentant une reproduction du code d'identification au moyen d'un appareil optique.

17. Procédé selon la revendication 16, **caractérisé en ce qu'**à l'étape de procédé (S2), la transmission présente une lecture du code d'identification par un utilisateur et une entrée au moyen d'un clavier.

18. Procédé selon la revendication 16, **caractérisé en ce qu'**à l'étape de procédé (S2), la transmission présente une émission du code d'identification au moyen de signaux lumineux.

19. Entraînement de meuble électromotorisé (2) d'un agencement (1) selon l'une des revendications 1 à 13, comprenant un dispositif de commande (5), un moyen d'alimentation en énergie (8), un moyen de manoeuvre (10), l'entraînement de meuble électromotorisé (2) étant prévu pour une liaison de communication avec un appareil de données (21) de l'agencement (1) à associer,
**caractérisé en ce**
**que** l'entraînement de meuble électromotorisé (2) est équipé d'un moyen d'identification (15) pour une première voie de transmission (24) de la liaison de communication et d'un moyen de transmission (7) pour une seconde voie de transmission (25) de la liaison de communication.
